Europäisches Patentamt

European Patent Office

Office européen des brevets

(11) Veröffentlichungsnummer: **0 409 182 A1**

# (12) EUROPÄISCHE PATENTANMELDUNG

(21) Anmeldenummer: **90113701.8**

(22) Anmeldetag: **17.07.90**

(51) Int. Cl.5: **B60J 7/04**

(30) Priorität: **21.07.89 DE 3924037**

(43) Veröffentlichungstag der Anmeldung:
**23.01.91 Patentblatt 91/04**

(84) Benannte Vertragsstaaten:
**DE ES FR GB IT NL SE**

(71) Anmelder: **Webasto AG Fahrzeugtechnik**
**Kraillingerstrasse 5**
**D-8035 Stockdorf(DE)**

(72) Erfinder: **Müller-Spanka, Gerhard**
**Estingerstrasse 32**
**D-8089 Emmering(DE)**
Erfinder: **Kempter, Michael**
**Antonienstrasse 1**
**D-8000 München 40(DE)**

(54) **Wasserablaufeinrichtung für Rahmen von Fahrzeug-Schiebedächern und dergleichen.**

(57) Wasserablaufeinrichtung für Blechrahmen von Fahrzeug-Schiebedächern, -Ausstelldächern und dergleichen, mit mindestens einem aus Metallblech gefertigten Wasserablaufrohr zum Ableiten von Wasser aus einer von dem Rahmen gebildeten, die Dachöffnung mindestens an einem Teil ihres Umfangs umgebenden Wasserrinne über einen Rahmendurchbruch. Das Wasserablaufrohr ist aus einem Blech gefertigt, dessen Normalpotential mindestens näherungsweise gleich dem Normalpotential des Rahmenbleches ist. In das Wasserablaufrohr ist ein eine Anlagefläche an dem Rahmen bildender Bund eingearbeitet. Das Wasserablaufrohr ist mit dem Rahmen durch Einbördeln oder Vernieten des an den Bund anschließenden und durch den Rahmendurchbruch hindurchgesteckten einen Endes des Wasserablaufrohrs fest verbunden.

## FIG. 2

EP 0 409 182 A1

Die Erfindung bezieht sich auf eine Wasserablaufeinrichtung für Blechrahmen von Fahrzeug-Schiebedächern, -Ausstelldächern und dergleichen, mit mindestens einem aus Metallblech gefertigten Wasserablaufrohr zum Ableiten von Wasser aus einer von dem Rahmen gebildeten, die Dachöffnung mindestens an einem Teil ihres Umfangs umgebenden Wasserrinne über einen Rahmendurchbruch.

Bei einer bekannten Wasserablaufeinrichtung dieser Art (DE-PS 25 43 734) ist das Wasserablaufrohr mit dem Blechrahmen verlötet oder verschweißt. Praktische Erfahrungen haben gezeigt, daß durch an der Löt- oder Schweißstelle verbleibenden Zunder oder dergleichen Korrosion im Bereich des Wasserablaufs auftreten kann. Außerdem bedingt der Löt- oder Schweißvorgang einen hohen Arbeitsaufwand und eine Nachbearbeitung, wie z.B. ein Bürsten der Löt- oder Schweißstelle.

Es ist ferner aus der nichtvorveröffentlichten, aber zum Stand der Technik gemäß § 3, Abs. 2 PatG gehörenden Patentanmeldung P 38 35 017.3 bekannt, das metallische Wasserablaufrohr als Druckgußstück auszubilden, das einen sich gegen den Rand des Rahmendurchbruchs von außen flächig anlegenden Auflagebund aufweist und das mit dem Rahmen durch Verstemmen des durch den Rahmendurchbruch hindurchgesteckten einen Endes des Wasserablaufrohrs fest verbunden ist. Dadurch wird zwar die Montage vereinfacht; eine Spannungskortosion kann jedoch nicht mit Sicherheit ausgeschlossen werden.

Der im Anspruch 1 angegebenen Erfindung liegt die Aufgabe zugrunde, eine kostensparende Wasserablaufeinrichtung der eingangs genannten Art zu schaffen, bei welcher nicht nur die Montage vereinfacht, sondern die Kortosionsgefahr noch weiter herabgesetzt ist.

Diese Aufgabe wird erfindungsgemäß dadurch gelöst, daß das Wasserablaufrohr aus einem Blech gefertigt ist, dessen Normalpotential mindestens näherungsweise gleich dem Normalpotential des Rahmenblechs ist, daß in das Wasserablaufrohr ein eine Anlagefläche an dem Rahmen bildender Bund eingearbeitet ist und daß das Wasserablaufrohr mit dem Rahmen durch Einbördeln oder Vernieten des an den Bund anschließenden und durch den Rahmendurchbruch hindurchgesteckten einen Endes des Wasserablaufrohrs fest verbunden ist. Vorteilhafte Weiterbildungen des Erfindungsgegenstandes sind den Unteransprüchen zu entnehmen Durch das Einbördeln des Wasserablaufrohrs in den Blechrahmen oder das Vernieten des Wasserablaulrohrs mit diesem Rahmen wird eine feste Verbindung mit geringem Arbeitsaufwand erzielt. Der Korrosionsgefahr ist wirkungsvoll begegnet. Zum einen entsteht nämlich kein Zunder oder dergleichen. Zum anderen stehen die Werkstoffe für den Blechrahmen und das Wasserablaufrohr in der elektrochemischen Spannungsreihe mindestens näherungsweise an gleicher Stelle, so daß das Zusammenfügen beider auch keine Kontakt- oder Spannungskortosion verursachen kann. Des weiteren entfällt jede aufwendige Nachbearbeitung.

Am einfachsten lassen sich Spannungskorrosionen dadurch ausschließen, daß der Rahmen und das Wasserablaufrohrs aus dem gleichen Werkstoff gefertigt sind.

Das Wasserablaufrohr kann zweckmäßig aus einem gezogenen Rohrabschnitt bestehen oder vorteilhaft als Schlitzrohr aus einer vorgeschnittenen Platine gerollt sein. Im letztgenannten Fall läßt sich der Bund besonders einfach dadurch ausbilden, daß in die Platine eine Sicke eingedrückt ist, aus der beim Rollen der Platine der Bund entsteht. Die Ausrichtung der Sicke auf der Platine hängt von der Ausrichtung der Achse des Wasserablaufrohres zu der Rahmenwandfläche ab, gegen die sich der Bund anlegt. Im Falle eines Schlitzrohrs erfolgt der Einbau des Wasserablaufrohres in den Rahmen vorzugsweise so, daß der Schlitz oben liegt. Dadurch wird ein Auslecken von Wasser auch dann vermieden, wenn der Schlitz eines von Löt- oder Schweißstellen freien Wasserablaufrohres nicht vollkommen dicht sein sollte. Die Schlitzkanten des Schlitzrohrs sind zweckmäßig mit ineinandergreifenden Verzahnungen versehen, die hinterschnitten sein können, um für einen besonders guten Zusammenhalt zu sorgen.

Bei Verwendung eines aus einem gezogenen Rohrabschnitt bestehenden Wasserablaufrohres läßt sich der Bund einfach an dem Rohr anstauchen. Auf diese Weise läßt sich der Bund aber auch bei einem aus einer vorgeschnittenen Platine gerollten Wasserablaufrohr ausbilden.

Bevorzugte Ausführungsbeispiele der Erfindung sind nachstehend anhand der beiliegenden Zeichnungen näher erläutert. Es zeigen:

Fig.1 die schematische Draufsicht auf einen Schiebedachrahmen,

Fig. 2 in größerer Darstellung den Schnitt entlang der Linie II-II der Fig. 1,

Fig. 3 die Draufsicht auf eine zur Bildung des Wasserablaufrohres vorgesehenen Platine,

Fig. 4 in größerer Darstellung den Teilschnitt entlang der Linie IV-IV der Fig. 3,

Fig. 5 die Draufsicht auf eine Platine gemäß einer abgewandelten Ausführungsform,

Fig. 6 die Stirnansicht der Platine nach Fig. 5,

Fig. 7 die Stirnansicht der zu einem Rohr gerollten Platine nach den Fig 5 und 6 sowie

Fign. 8 und 9 Längsschnitte durch ein gezogenes Wasserablaulrohr vor und nach dem Anstauchen des Bundes.

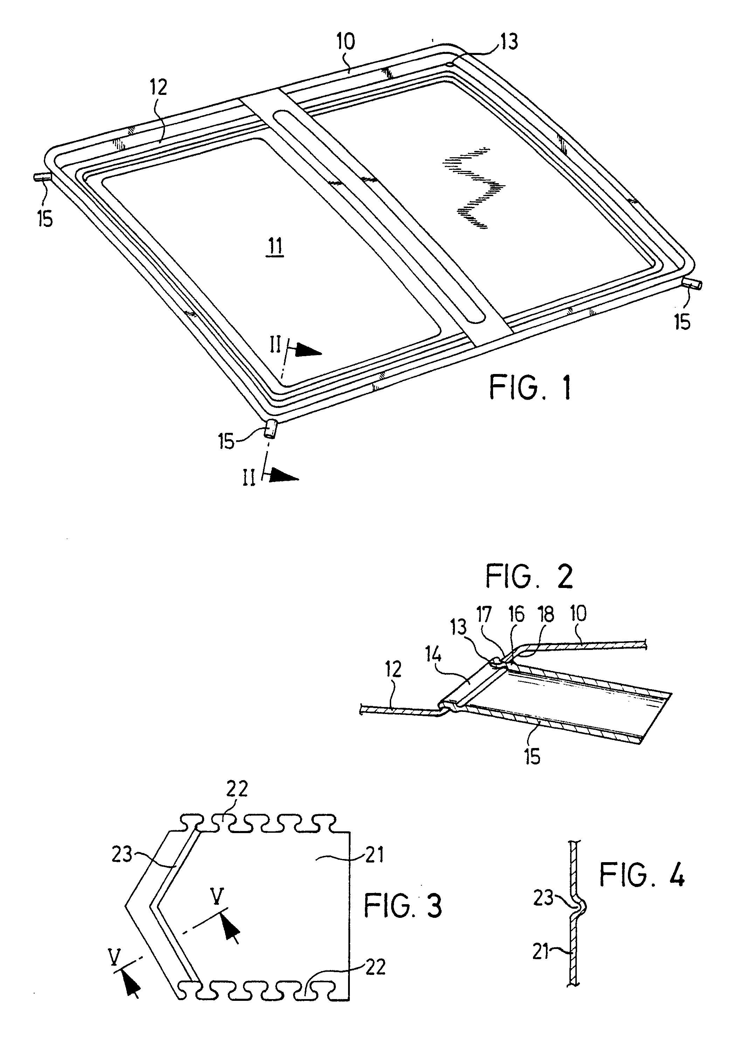

In Fig. 1 ist ein aus Blech gefertigter Schiebedachrahmen 10 veranschaulicht, der eine Dachöffnung 11 begrenzt. Der Rahmen 10 bildet eine Wasserrinne 12, welche die Dachöffnung 11 entlang mindestens einem Teil ihres Umfangs umgibt. Der Rahmen 10 ist an seinen vier Ecken jeweils mit einem Durchbruch 13 zum Ableiten von Wasser aus der Wasserrinne 12 über ein im Bereich des Durchbruchs 13 mit dem Rahmen 10 verbundenes Wasserablaufrohr 15 versehen.

Die Wasserablaufrohre 15 sind aus einem Metallblech gefertigt, dessen Normalpotential mindestens näherungsweise gleich dem Normalpotential des Bleches des Schiebedachrahmens 10 ist, d.h. die Werkstoffe des Rahmens und der Wasserablaufrohre 15 stehen in der elektrochemischen Spannungsreihe an gleicher oder eng benachbarter Stelle. Wie im einzelnen aus Fig. 2 hervorgeht, trägt das Wasserablaufrohr 15 nahe seinem einen Ende 14 einen radial nach außen vor springenden Bund 16, der eine Fläche zur Anlage an der Rahmenaußenseite 18 bildet. Zur Montage wird das Ablaufrohr 15 mit seinem Ende 14 durch den Durchbruch 13 des Rahmens 10 hindurchgesteckt. Daraufhin wird das an der Rahmeninnenseite 17 überstehende Rohrende mit dem Rahmen 10 durch Umbördeln oder Vernieten fest verbunden. Bei diesem Vorgang wird das Rohrende 14 gestaucht oder umgelegt, während der Bund 16 als Gegenhalter dient. Der Rand des Durchbruchs 13 wird auf diese Weise zwischen der ihm zugewendeten Seite des Bundes 16 und dem umgelegten Ende 14 fest eingespannt.

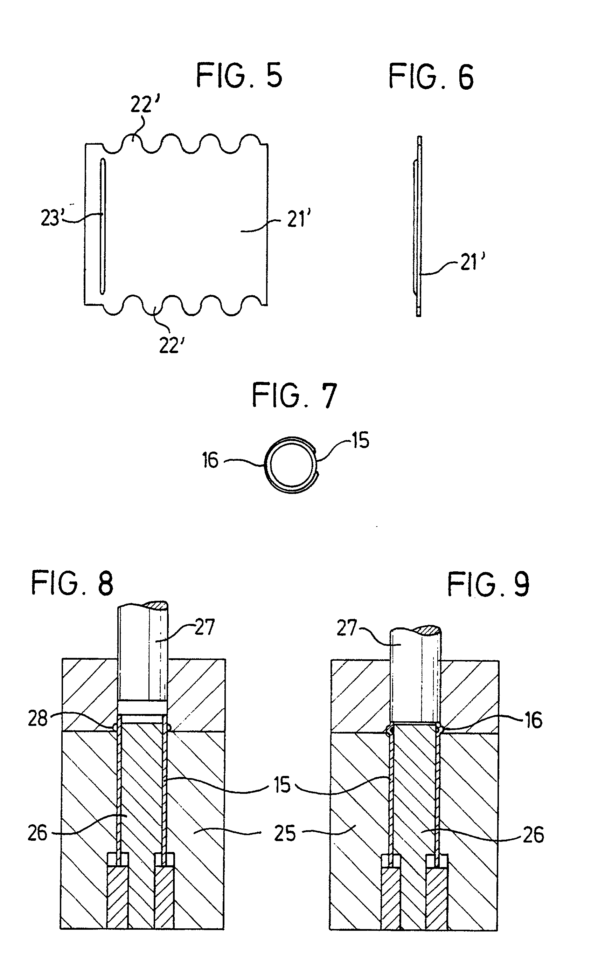

Das Wasserablaufrohr 15 kann aus einer vorgeschnittenen Platine 21 der in den Fign. 3 und 4 veranschaulichten Art zu einem Schlitzrohr gerollt werden. Dabei können die die Schlitzkanten des Schlitzrohrs bildenden Kanten der Platine 21 mit Verzahnungen 22 versehen sein, die beim Rollen des Rohres ineinandergreifen. Im Falle der in Fig. 3 gezeigten Ausführungsform sind die Verzahnungen 22 hinterschnitten, was für eine besonders sichere gegenseitige Verbindung der Platinenränder auch ohne zusätzliche Maßnahmen, wie Schweißen oder dergleichen, sorgt. Entsprechend den Fign. 3 und 4 ist in die Platine 21 eine Sicke 23 eingedrückt, die nach dem Rollen der Platine 21 den Bund 16 bildet. Die Bundgeometrie ist an die Rahmenanlagefläche anzupassen.

Die Fign. 5 und 6 zeigen eine Platine 21′ mit einer abgewandelten, sinusförmig gewellten Verzahnung 22′ an den Platinenrändern. In die Platine 21′ ist eine durchgehend geradlinige Sicke 23′ eingedrückt, die nach Rollen der Platine den radial vorspringenden Bund 16 bildet (Fig. 7). Um ein Auslecken von Wasser aus dem gerollten Wasserablaufrohr 15 zu vermeiden, wird das Schlitzrohr in den Durchbruch 13 des Rahmens 10 zweckmäßig so eingesetzt, daß die Schlitzkanten oben liegen.

Entsprechend einer abgewandelten Ausführungsform kann das Wasserablaufrohr 15 aber auch aus einem gezogenen Rohrabschnitt bestehen. Der Bund 16 kann an einem gezogenen Rohrabschnitt durch Anstauchen ausgebildet werden, wie dies in den Fign. 8 und 9 schematisch veranschaulicht ist. Dazu wird der Rohrabschnitt in ein Stauchwerkzeug 25 eingesetzt und innen mittels eines Führungsbolzens 26 geführt. Dann wird der Rohrabschnitt an seinem in den Fign. 8 und 9 oberen Ende mittels eines Stempels 27 gestaucht, wobei Rohrwerkstoff zur Bildung des Bundes 16 in eine Ringkammer 28 des Werkzeugs 25 ausweichen kann.

Falls erwünscht, kann auch bei Verwendung eines aus einer Platine gerollten Wasserablaufrohrs der Bund 16 in der in den Fign. 8 und 9 skizzierten Weise angestaucht werden.

## Ansprüche

1. Wasserablaufeinrichtung für Blechrahmen von Fahrzeug-Schiebedächern, -Ausstelldächern und dergleichen, mit mindestens einem aus Metallblech gefertigten Wasserablaufrohr zum Ableiten von Wasser aus einer von dem Rahmen gebildeten, die Dachöffnung mindestens an einem Teil ihres Umfangs umgebenden Wasserrinne über einen Rahmendurchbruch, **dadurch gekennzeichnet,** daß das Wasserablaufrohr (15) aus einem Blech gefertigt ist, dessen Normalpotential mindestens näherungsweise gleich dem Normalpotential des Rahmenblechs ist, daß in das Wasserrohr ein eine Anlagefläche an dem Rahmen (10) bildender Bund (16) eingearbeitet ist und daß das Wasserablaufrohr mit dem Rahmen durch Einbördeln oder Vernieten des an den Bund anschließenden und durch den Rahmendurchbruch (13) hindurchgesteckten einen Endes (14) des Wasserablaufrohrs fest verbunden ist.

2. Wasserablaufeinrichtung nach Anspruch 1, dadurch gekennzeichnet, daß der Rahmen (10) und das Wasserablaufrohr (15) aus dem gleichen Werkstoff gefertigt sind.

3. Wasserablaufeinrichtung nach Anspruch 1 oder 2, dadurch gekennzeichnet, daß das Wasserablaufrohr (15) als Schlitzrohr aus einer vorgeschnittenen Platine (21, 21′) gerollt ist.

4. Wasserablaufeinrichtung nach Anspruch 3, dadurch gekennzeichnet, daß in die Platine (21, 21′) eine den Bund (16) bildende Sicke (23, 23′) eingedrückt ist.

5. Wasserablaufeinrichtung nach Anspruch 3 oder 4, dadurch gekennzeichnet, daß das Schlitzrohr an den Schlitzkanten mit ineinandergreifenden Verzahnungen (22, 22′) versehen ist.

6. Wasserablaufeinrichtung nach Anspruch 5, dadurch gekennzeichnet, daß die Verzahnungen (22) hinterschnitten sind.

7. Wasserablaufeinrichtung nach Anspruch 1 oder 2, dadurch gekennzeichnet, daß das Wasserablaufrohr (15) aus einem gezogenen Rohrabschnitt besteht.

8. Wasserablaufeinrichtung nach Anspruch 3 oder 7, dadurch gekennzeichnet, daß der Bund (16) an dem gerollten oder gezogenen Rohr angestaucht ist.

FIG. 1

FIG. 2

FIG. 3

FIG. 4

# FIG. 5

# FIG. 6

# FIG. 7

# FIG. 8

# FIG. 9

## EINSCHLÄGIGE DOKUMENTE

EP 90113701.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| D,P, X | <u>DE - C1- 3 835 017</u><br>(WEBASTO AG FAHRZEUGTECHNIK)<br>* Fig. 1; Spalte 1, Zeile 67 - Spalte 2, Zeile 11 *<br>-- | 1 | B 60 J 7/04 |
| A | <u>DE - A1 - 3 739 502</u><br>(KAROSSERIEWERKE WEINSBERG GMBH)<br>* Fig. 1; Spalte 2, Zeilen 26-30; Spalte 4, Zeilen 14-18 *<br>-- | 1,2 | |
| A | <u>DE - C2 - 3 114 393</u><br>(DAIMLER-BENZ AKTIENGESELL-SCHAFT)<br>* Spalte 1, Zeilen 1-16 *<br>-- | | |
| A | <u>DE - A1 - 3 340 671</u><br>(WILLY VOIT GMBH & CO STANZ- UND METALLWERK)<br>* Fig. 1,2 *<br>-- | | RECHERCHIERTE SACHGEBIETE (Int. Cl.⁵) |
| A | <u>DD - A1 - 252 329</u><br>(VEB PEENE-WERFT WOLGAST)<br>* Zeichnung; Zusammenfas-sung *<br>---- | | B 60 J<br>B 62 D<br>B 21 D |

Der vorliegende Recherchenbericht wurde für alle Patentansprüche erstellt.

| Recherchenort | Abschlußdatum der Recherche | Prüfer |
|---|---|---|
| WIEN | 23-10-1990 | WIDHALM |